# EUROPEAN PATENT SPECIFICATION

(11) **EP 0 750 708 B1**
(45) Date of publication and mention of the grant of the patent: **12.07.2000**
(21) Application number: 95907016.0
(22) Date of filing: 25.01.1995
(51) Int. Cl.: E04C 3/06, E04B 1/24, E04B 1/58

(54) **BODY STRUCTURE**
RAHMEN
OSSATURE

(30) Priority: 25.01.1994 FI 940367
(43) Date of publication of application: 02.01.1997
(73) Proprietor: Valmet Automotive Oy, 23501 Uusikaupunki (FI)
(72) Inventor: FORSMAN, Tom, FIN-21570 Sauvo (FI)
(74) Representative: Tanskanen, Jarmo Tapio
(86) International application number: FI9500037
(87) International publication number: WO9520081

(56) References cited:
- DE-A- 2 942 566
- DE-C- 2 644 040
- US-A- 2 457 129
- US-A- 3 628 300
- US-A- 4 246 737

## Description

The present invention concerns a frame structure as defined in the preamble to Claim 1. The frame structure can be used in various applications, such as e.g. vehicles, building technology and interior decoration, and in shipbuilding.

Metallic frame structures for use in various applications are traditionally made of I beams, U beams or square tubes, which are usually welded together to form a latticed structure with a spacing as required by the strength and rigidity which one desires to achieve.

In numerous applications, a significant characteristic of the frame structure, in view of overlaying and coating, is the evenness of its surface. This often implies, when beams, rails and tubes of prior art are used, necessity of cutting the end of a piece to be joined to suitable shape in order to fit it to the side of the mating piece. For instance, on an I beam the flanges are cut off so that the web can be inserted between the flanges of another I beam (cf. DE-A-2 644 040). Such joints are cumbersome and slow in implementation, and they cause extra costs in the manufacturing process.

The object of the invention is to eliminate these drawbacks. Specifically, the object of the invention is to present a novel frame structure which enables convenient and fast manufacturing of a frame structure and by which one obtains in a simple way, a frame structure with even surfaces, on which it is easy to fix, e.g. to cement, various surface materials, such as sheets on a metal or wood base.

Regarding the features characterizing the invention, reference is made to the Claims section.

The frame structure of the invention is composed of I beams connected to each other, these I beams consisting of two flanges and one web connecting these. As taught by the invention, both flanges of the I beams used comprise two joining parts and one connecting part therebetween, the web resting on the latter. These planar joining parts and connecting parts are so dimensioned and shaped that the inner surfaces of the opposed joining parts of the I beam are at a distance from each other which is substantially equal to that between the outer surfaces of the connecting parts.

When this is the case, in manufacturing a frame structure in the way taught by the invention two I beams can be joined at an angle against each other by first rendering on one end of one beam the joining parts flush with the connecting part on both flanges and, thereafter, inserting the end of the I beam between the joining parts of the other I beam for joining the I beams.

Joining of the I beams may be effected with the aid of rivets, bolts, screws or, depending on the material of the I beams, also by welding. In a frame structure according to the invention the joined I beams are advantageously at right angles, but their joining to each other is equally possible at an oblique angle.

In an advantageous embodiment of the invention the I beams are made of extruded aluminium section.

In an advantageous embodiment of the invention the end of the I beam is pressed, or squeezed, so that the outer surfaces of the joining parts come to lie flush with the outer surfaces of the connecting parts, whereby the end of the I beam can be inserted between the joining parts of another similar I beam.

The frame structure of the invention is advantageously made by connecting together the requisite number of I beams according to the invention, at right angles against each other, so that a strong enough and rigid enough lattice structure is obtained which is substantially even on both sides, thus constituting a good mounting site for various kinds of surface sheet.

Other advantages of the invention, and various alternative structural designs, will become apparent from the description following below, in which the invention is described in detail in the attached drawing, wherein:-
Fig. 1 presents an I beam for use in a frame structure according to the invention, and
Fig. 2 presents the joint between two I beams in a frame structure according to the invention.

The I beam used in the invention comprises two flanges 3 and 4, parallel with each other, and a web 7 connecting them and located perpendicularly between them.

Both flanges 3 and 4 are in their breadth direction divided into three planar parts: two joining parts 9 and 10 on the margins, and a connecting part 11 between them. In the present embodiment, the joining parts and the connecting part are equal in width, i.e., the surface of the I beam is divided into three parts of substantially equal width. The joining parts 9 and 10 are coplanar, and the connecting part 11 constitutes a recess, or an upper surface lower down and closer to the web, between the joining parts, compared with the upper surface of the joining parts.

In other words, the inner surfaces 12 of the opposed joining parts 9, respectively 10, of the flanges 3 and 4 have a distance from each other which substantially equals that of the outer surfaces 13 of the connecting parts.

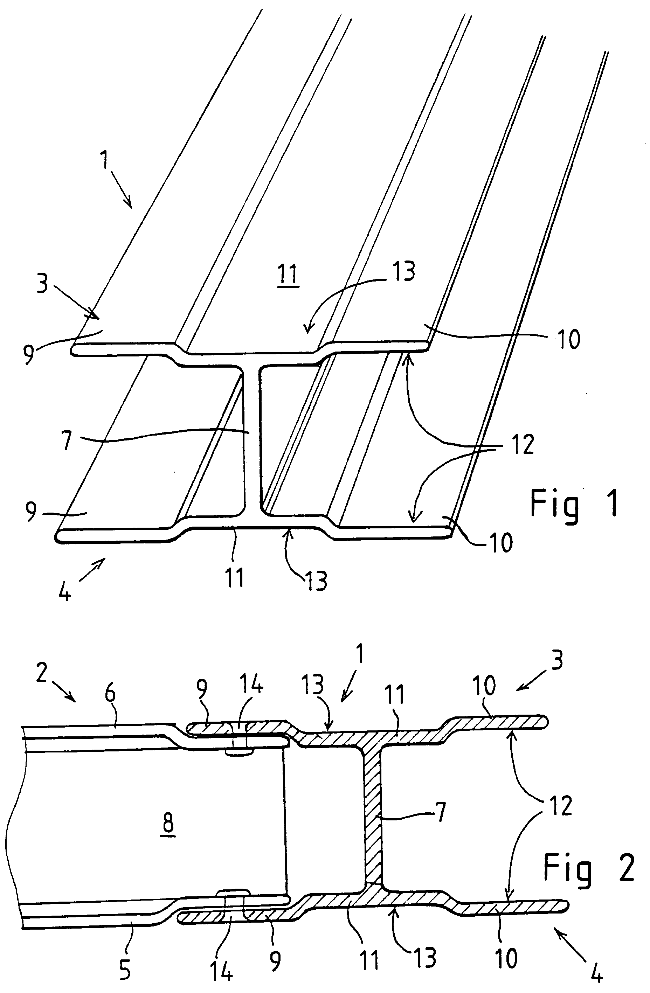

The frame structure of the invention is manufactured, as shown in Fig. 2, as follows. The end of one I beam 2 intended to be joined to another I beam 1 is pressed, or by another appropriate means rendered uniform in thickness, i.e., the joining parts on the ends of both flanges 5 and 6 are bent so that the outer surfaces of the joining parts will be flush with the outer surfaces of the connecting parts. Hereby the end of the I beam 2 will be smooth on either side of the web 8, and the end of the I beam will be uniform over its entire breadth. It follows that the distance from each other of the outer surfaces of flanges 5 and 6 is substantially consistent with the distance between the inner surfaces 12 of the joining parts 9 of the other I beam's 1 flanges 3 and 4.

Hereby, when the end of the I beam 2 has been sawed, or in any other way cut off, at right angles, it can be inserted at right angles between the joining parts 9 of the I beam 1 and the joining parts of both I beams can be joined e.g. by means of rivets 14, as shown in Fig. 2.

When making right-angled joints, one need not make any extra cuts, or other material removing, on the end of the I beam which is going to be joined: the I beam which has been cut straight across is merely pressed to appropriate shape. Similarly, when oblique angles are produced in the frame structure of the invention, the end of the I beam is merely cut off at the oblique angle one desires to make, and it is pressed into shape to be ready for installation.

In the foregoing, the invention has been described in detail with the aid of the drawing, while different embodiments of the invention are feasible within the extend of the protection determined by the terms of the claims.

## Claims

1. A frame structure, composed of I beams (1,2) joined together and comprising a first I beam (1) and a second I beam (2), each having two flanges (3,4,5,6) and between them a web (7,8), and which I beams are joined to each other so that one end of the second I beam (2) lies between the flanges of the first I beam (1), characterized in that the flanges (3,4,5,6) of the I beams (1,2) comprise two joining parts (9; 10) and a connecting part (11) between them, on which the web (7,8) abuts; and that the inner surfaces (12) of the opposing joining parts (9,9; 10,10) are at substantially equal distance from each other to that of the outer surfaces (13) of the connecting parts (11); and that for joining together the first I beam (1) and the second I beam (2) in the region adjacent to the end of the second I beam (2) the upper surface of the joining parts (9; 10) of the end of the second beam 2 is rendered substantially flush with the outer surface (13) of its connecting part (11) so that the end of the second I beam (2), shaped in the way described, can be inserted between the joining parts (9,9; 10,10) of the first I beam (1).

2. Frame structure according to claim 1, characterized in that the I beams (1,2) are made of extruded aluminium section.

3. Frame structure according to claim 1 or 2, characterized in that the end of the I beam (1,2) is squeezed or pressed so as to fit in between the joining parts of the other beam.

4. Frame structure according to any one of claims 1-3, characterized in that the I beams (1,2) are joined by rivets, bolts or screws.

5. Frame structure according to any one of claims 1-4, characterized in that a plurality of I beams have been joined together at right angles or at oblique angles to form a frame structure which is substantially smooth on both sides.

6. The use of a frame structure according to any one of claims 1-5 in vehicles, in building technology, in interior decoration and/or in shipbuilding.

## Patentansprüche

1. Rahmenstruktur, die aus Doppel-T-Trägern (1,2) besteht, die zusammengefügt sind und einen ersten Doppel-T-Träger (1) sowie einen zweiten Doppel-T-Träger (2) umfassen, die jeweils zwei Flansche (3,4,5,6) und einen Steg (7,8) dazwischen aufweisen, wobei die Doppel-T-Träger so miteinander verbunden sind, daß ein Ende des zweiten Doppel-T-Trägers (2) zwischen den Flanschen des ersten Doppel-T-Trägers (1) liegt, **dadurch gekennzeichnet**, daß die Flansche (3,4,5,6) der Doppel-T-Träger (1,2) zwei Fügeteile (9;10) und einen Verbindungsteil (11) dazwischen umfassen, an denen der Steg (7,8) anliegt, und daß die Innenflächen (12) der einander gegenüberliegende Fügeteile (9,9:10,10) im wesentlichen genauso weit voneinander beabstandet sind wie die Außenflächen (13) der Verbindungsteile (11), und daß, um den ersten Doppel-T-Träger (1) und den zweiten Doppel-T-Träger (2) in dem Bereich an das Ende des zweiten Doppel-T-Trägers (2) angrenzend zusammenzufügen, die Oberseite der Fügeteile (9;10) des Endes des zweiten Doppel-T-Trägers (2) im wesentlichen bündig mit der Außenfläche (13) seines Verbindungsteils (11) ist, so daß das Ende des zweiten Doppel-T-Trägers (2), das wie beschrieben geformt ist, zwischen die Fügeteile (9,9;10,10) des ersten Doppel-T-Trägers (1) eingeführt werden kann.

2. Rahmenstruktur nach Anspruch 1, **dadurch gekennzeichnet**, daß die Doppel-T-Träger (1,2) aus extrudiertem Aluminiumprofil bestehen.

3. Rahmenstruktur nach Anspruch 1 oder 2, **dadurch gekennzeichnet**, daß das Ende des Doppel-T-Trägers (1,2) gequetscht bzw. gepreßt wird, um zwischen die Fügeteile des anderen Trägers zu passen.

4. Rahmenstruktur nach einem der Ansprüche 1-3, **dadurch gekennzeichnet**, daß die Doppel-T-Träger (1,2) durch Niete, Bolzen oder Schrauben miteinander verbunden werden.

5. Rahmenstruktur nach einem der Ansprüche 1-4, **dadurch gekennzeichnet**, daß eine Vielzahl von Doppel-T-Trägern in rechtem Winkel oder in schiefem Winkel miteinander verbunden worden sind, um eine Rahmenstruktur herzustellen, die im wesentlichen auf beiden Seiten glatt ist.

6. Einsatz einer Rahmenstruktur nach einem der Ansprüche 1-5 in Fahrzeugen, im Bauwesen, in der Innenarchitektur und/oder im Schiffbau.

## Revendications

1. Structure de cadre composée de poutres en I (1, 2) reliées et comprenant une première poutre en I (1) et une deuxième poutre en I (2) ayant chacune deux ailes (3, 4, 5, 6) et entre elles une âme (7, 8) et lesdites poutres en I étant reliées l'une à l'autre de façon qu'une extrémité de la deuxième poutre en I (2) se trouve entre les ailes de la première poutre en I (1), caractérisée en ce que les ailes (3, 4, 5, 6) des poutres en I (1, 2) comprennent deux éléments de jointure (9, 10) et un élément de liaison (11) entre elles, contre lesquels l'âme (7, 8) bute, et en ce que les surfaces internes (12) des éléments de jointure opposés (9, 9; 10, 10) sont sensiblement à égale distance l'un de l'autre par rapport aux surfaces externes (13) des éléments de liaison (11); et en ce que pour relier la première poutre en I (1) et la deuxième poutre en I (2) dans la zone adjacente à l'extrémité de la deuxième poutre en I (2) la surface supérieure des éléments de jointure (9, 10) de l'extrémité de la deuxième poutre (2) est sensiblement mise à niveau avec la surface externe (13) de son élément de liaison (11) de façon que l'extrémité de la deuxième poutre en I (2), formée de a manière décrire, puisse être insérée entre les éléments de jointure (9, 9; 10, 10) de la première poutre en I (1).

2. Structure de cadre selon la revendication 1, caractérisée en ce que les poutres en I (1, 2) sont faites en un profilé extrudé en aluminium.

3. Structure de cadre selon la revendication 1 ou 2, caractérisée en ce que l'extrémité de la poutre en I (1, 2) est serrée ou pressée de façon à s'insérer entre les éléments de liaison de l'autre poutre.

4. Structure de cadre selon l'une quelconque des revendication 1 à 3, caractérisée en ce que les poutres en I (1, 2) sont reliées par des rivets, des boulons ou des vis.

5. Structure de cadre selon l'une quelconque des revendications 1 à 4, caractérisée en ce qu'une pluralité de poutres en I ont été reliées en angles droits Ou en angles obliques pour former une structure de cadre sensiblement uniforme sur les deux côtés.

6. Utilisation d'une structure de cadre selon l'une quelconque des revendications 1 à 5 dans des véhicules, dans des techniques de construction, dans des décorations intérieures et/ou dans la construction navale.
